# EUROPEAN PATENT APPLICATION

(11) **EP 4 163 002 A1**
(43) Date of publication of application: **12.04.2023**
(21) Application number: 21822049.9
(22) Date of filing: 26.05.2021
(51) Int. Cl.: B01D 19/00, B01D 63/06, B01D 69/04, B01D 71/32

(54) **TUBE UNIT, DEAERATION MODULE, AND METHOD FOR PRODUCING TUBE UNIT**

(30) Priority: 08.06.2020 JP 2020099157
(71) Applicant: DIC Corporation, Tokyo 174-8520 (JP)
(72) Inventor: KAWASHIMA, Kazuyasu, Ichihara-shi, Chiba 290-8585 (JP); SATO, Akira, Ichihara-shi, Chiba 290-8585 (JP); SUGANUMA, Youhei, Ichihara-shi, Chiba 290-8585 (JP); OI, Kazumi, Ichihara-shi, Chiba 290-8585 (JP)
(74) Representative: TBK
(86) International application number: PCT/JP2021/020026
(87) International publication number: WO 2021/251144

(57) **Abstract**

A tube unit includes multiple tubes, a bundling portion that bundles end portions of the tubes, and pipe elements that are inserted into respective end portions of the tubes and support the end portions of the tubes from inside. A degassing module includes the tube unit and a housing in which the tube unit is accommodated and that separates inside spaces inside the respective tubes from an outside space outside the tubes. In addition, each tube is a tubular membrane that allows gas to pass therethrough and prohibits liquid from passing therethrough. The housing has an inside-space opening that is in communication with the inside spaces of the tubes and an outside-space opening that is in communication with the outside space of the tubes.

## Description

### Technical Field

The present invention relates to a tube unit in which end portions of tubes are bundled, to a degassing module that includes the tube unit, and to a method of manufacturing the tube unit.

### Background Art

PTL 1 listed below describes a bundle of fluororesin tubes in which end portions of respective tubes are bundled together. The bundle of fluororesin tubes includes bundled fluororesin tubes, a fluororesin sleeve fitted around each end portion of the bundle of fluororesin tubes, and a connection portion that is made of a thermally fluidizing fluororesin and that integrally joins the fluororesin sleeve to the fluororesin tubes.

### Citation List

### Patent Literature

PTL 1: Japanese Unexamined Patent Application Publication No. 1-131392

### Summary of Invention

### Technical Problem

The present inventors prepared a tube unit having the same configuration as that of the bundle of fluororesin tubes described in PTL 1 and conducted tests of degassing a liquid. The tube unit prepared for the tests included multiple tubes of which the end portions were bundled by bundling portions. After the tests, some of the tubes came off the bundling portions, and the liquid leaked there.

Accordingly, an object of one aspect of the present invention is to provide a tube unit that can reduce the likelihood of a tube coming off the bundling portion, to provide a degassing module equipped with the tube unit, and to provide a method of manufacturing the tube unit. Solution to Problem

The present inventors studied causes of the tube coming off the bundling portion and reached a conclusion as described below. An aspect of the present invention is made on the basis of the findings below.

When a liquid was supplied to the inside or outside of the tubes, the tubes swelled with the liquid. After the supply of the liquid was stopped, the tubes desiccated and contracted. The swelling and contraction of the tubes due to the liquid supplied is likely to be one of the causes of the tube coming off the bundling portion. The swelling and contraction of the tubes were observed more clearly when tubes made of a fluororesin, such as amorphous fluoropolymer (AF), were used or when an ester-based liquid, such as ethyl acetate, was used.

When the tube unit was used in an external perfusion type degassing application in which a liquid flowed outside the tubes and the gas inside the tubes was drawn, a negative pressure inside the tubes caused the tubes to contract or to be depressed partly. The contraction or depression due to the negative pressure inside the tubes is likely to be another cause of the tube coming off the bundling portion.

Accordingly, a tube unit according to an aspect of the present invention includes multiple tubes, a bundling portion that bundles end portions of the tubes, and pipe elements that are inserted into respective end portions of the tubes and support the end portions of the tubes from inside.

In the tube unit, the pipe elements are inserted into respective end portions of the tubes that are bundled by the bundling portion. The pipe elements support respective tubes from inside. As a result, the shape of each tube can be maintained where the pipe element is inserted, for example, when the tube swells or contracts due to a liquid being supplied to the inside or outside of the tube or when the tube contracts or is depressed due to a negative pressure inside the tube. Accordingly, the likelihood of a tube coming off the bundling portion can be reduced.

Each pipe element can be shaped cylindrically. The pipe elements of the tube unit are each shaped cylindrically, which enables the pipe elements to be manufactured easily at low cost and also enables the end portions of the tubes to be arranged densely.

Each pipe element can be shaped hexagonally. The pipe elements of the tube unit can be formed as hexagonal pipes, which enables the end portions of the tubes to be arranged so as to form a honeycomb structure or a fine structure.

Each tube can include a tube end portion that is bundled by the bundling portion and a mid-tube portion that is not bundled by the bundling portion. An outer circumference of the pipe element can be 80% or more and 110% or less of an inner circumference of the mid-tube portion. In the case where the bundling portion is formed by thermal contraction, the tube end portion is reduced in diameter due to the thermal contraction of the bundling portion although the mid-tube portion is not affected by the thermal contraction. However, the outer circumference of each pipe element is 80% or more of the inner circumference of the mid-tube portion, which reduces the likelihood of a gap occurring between the tube end portion and the pipe element after the thermal contraction of the bundling portion. On the other hand, the outer circumference of the pipe element is 110% or less of the inner circumference of the mid-tube portion, which enables the pipe element to be inserted easily into the tube end portion before the thermal contraction of the bundling portion.

Each tube can include the tube end portion that is bundled by the bundling portion and the mid-tube portion that is not bundled by the bundling portion. In the extending direction A of the tube, a length of each pipe element can be 1% or more and 200% or less of a length of the tube end portion.

In the tube unit, the length of each pipe element is 1% or more of the length of the tube end portion in the extending direction A of the tube, which can reduce the likelihood of each tube coming off completely from the bundling portion. On the other hand, the length of the pipe element can be 200% or less of the length of the tube end portion in the extending direction A of the tube. Accordingly, part of the pipe element protrudes from the tube end portion. This can reduce the likelihood of the tube end portion being affected by deformation of the mid-tube portion even in the case where the mid-tube portion, which is not bundled by the bundling portion, swells or contracts due to a liquid supplied to the inside or outside of the tube or even in the case where the mid-tube portion contracts or is depressed due to a negative pressure inside the tube.

Each tube can contain a fluororesin. Accordingly, the tubes of the tube unit contain a fluororesin, which improves chemical resistance.

The pipe element can be made of a ceramic material. The pipe elements of the tube unit are made of a ceramic material, which can reduce the likelihood of chemical components of the pipe elements leaching out into the liquid when a liquid is supplied into the inside or outside of the tubes. Accordingly, the tube unit can be used, for example, in a device for liquid chromatography where elution of foreign matter poses a problem.

The bundling portion can include an outer sheath fitted around the tubes and a sealing member that fills a space among the tubes and between the outer sheath and the tubes. In the tube unit, the space among the tubes and between the outer sheath and the tubes is filled with the sealing member, which can reduce the likelihood of the fluid leaking out into the space among the tubes when a fluid, such as a liquid or a gas, is supplied to the end face of the bundling portion.

The end portions of the tubes can be spaced from each other. In the tube unit, the end portions of the tubes are spaced from each other, which enables each end portion to be covered with the sealing member. This can reduce the likelihood of the fluid leaking out at the interfaces of the end portions of the tubes.

According to an aspect of the present invention, a degassing module that degasses a liquid includes the above-described tube unit and a housing in which the tube unit is accommodated and that separates inside spaces inside respective tubes from an outside space outside the tubes. In addition, each tube is a tubular membrane that allows gas to pass therethrough and prohibits liquid from passing therethrough. The housing has an inside-space opening that is in communication with the inside spaces of the tubes, and an outside-space opening that is in communication with the outside space of the tubes.

In the degassing module, a liquid is supplied to one of the inside-space opening and the outside-space opening while the gas is drawn out from the other one of the inside-space opening and the outside-space opening. The liquid supplied to the degassing module is degassed while passing through the tubes. The tube unit configured as described above can reduce the likelihood of each tube coming off the bundling portion. As a result, the service life of the degassing module can be extended.

The liquid can be an ester-based liquid. When an ester-based liquid is supplied to the inside or outside of each tube, the tube swells or contracts conspicuously. The degassing module equipped with the above-described tube unit can reduce the likelihood of each tube coming off the bundling portion when the ester-based liquid is supplied to the inside or outside of the tube.

According to an aspect of the present invention, a method of manufacturing the tube unit can include i) a step of inserting pipe elements into respective end portions of tubes, the pipe elements supporting respective tubes from inside, and ii) a step of bundling the end portions of the tubes. In the method of manufacturing the tube unit, the pipe elements are inserted into the end portions of the tubes, and the pipe elements support respective tubes from inside. Moreover, the tubes are bundled together at both end portions of the tubes. Accordingly, the shape of each tube can be maintained where the pipe element is inserted when, for example, the tube swells or contracts due to a liquid being supplied to the inside or outside of the tube or when the tube contracts or is depressed due to a negative pressure inside the tube. As a result, the likelihood of a tube coming off the bundling portion can be reduced.

The step of bundling the end portions of the tubes includes i) a step of fitting an inner sleeve around at least one of the end portions of the tubes, the inner sleeve being made of a thermofusible resin, ii) a step of fitting an outer sleeve around the end portions of the tubes, the outer sleeve being made of a thermally contracting resin, and iii) a step of heating the end portions of the tubes to contract the outer sleeve and melt the inner sleeve, the step being carried out after the step of fitting the inner sleeve and the step of fitting the outer sleeve. According to the method of manufacturing the tube unit, the inner sleeve is fitted around at least one of the end portions of the tubes, the outer sleeve is fitted around the end portions of the tubes, and the end portions of the tubes are heated to contract the outer sleeve and melt the inner sleeves. As a result, the end portions of the tubes are gathered by the outer sleeve that contracts and are bundled by the thermofusible resin of the inner sleeves. Thus, the end portions of the tubes can be bundled together easily.

The step of heating can be carried out after the step of inserting the pipe elements. In the method of manufacturing the tube unit, the end portions of the tubes are heated to contract the outer sleeve and melt the inner sleeves after the pipe elements are inserted into respective end portions of the tubes. As a result, the end portions of the tubes come into contact with respective pipe elements when the outer sleeve contracts. The end portion of each tube can be thereby formed so as to follow the shape of the pipe element while reducing the likelihood of the end portion of each tube being depressed too much.

### Advantageous Effects of Invention

According to an aspect of the invention, the likelihood of a tube coming off the bundling portion can be reduced.

### Brief Description of Drawings

[Fig. 1] Fig. 1 is a schematic cross-sectional view illustrating an example of a degassing module.
[Fig. 2] Fig. 2 is a schematic perspective view illustrating an example of a tube unit.
[Fig. 3] Fig. 3 is a schematic cross-sectional view taken along line III-III in Fig. 2.
[Fig. 4] Fig. 4 is a schematic cross-sectional view taken along line IV-IV in Fig. 3.
[Figs. 5] Fig. 5(a), Fig. 5(b), Fig. 5(c), and Fig. 5(d) are schematic cross-sectional views illustrating examples of pipe elements.
[Fig. 6] Fig. 6 is a schematic cross-sectional view of a tube unit taken along line III-III in Fig. 2, in which pipe elements illustrated in Fig. 5(c) are used.
[Figs. 7] Fig. 7(a), Fig. 7(b), Fig. 7(c), and Fig. 7(d) are schematic cross-sectional views illustrating examples of pipe elements in relation to a sealing member.
[Figs. 8] Fig. 8(a) and Fig. 8(b) are views for explanation of a method of bundling tubes.
[Figs. 9] Fig. 9(a) and Fig. 9(b) are views for explanation of the method of bundling the tubes.
[Figs. 10] Fig. 10(a) and Fig. 10(b) are views for explanation of the method of bundling the tubes.
[Fig. 11] Fig. 11 is a schematic cross-sectional view taken along line III-III in Fig. 2, illustrating a modification example.

### Description of Embodiments

In accordance with an embodiment, a tube unit, a degassing module, and a method of manufacturing the tube unit will be described with reference to the drawings. Note that the same or equivalent components in the drawings will be denoted by the same reference signs and duplicated descriptions will be omitted.

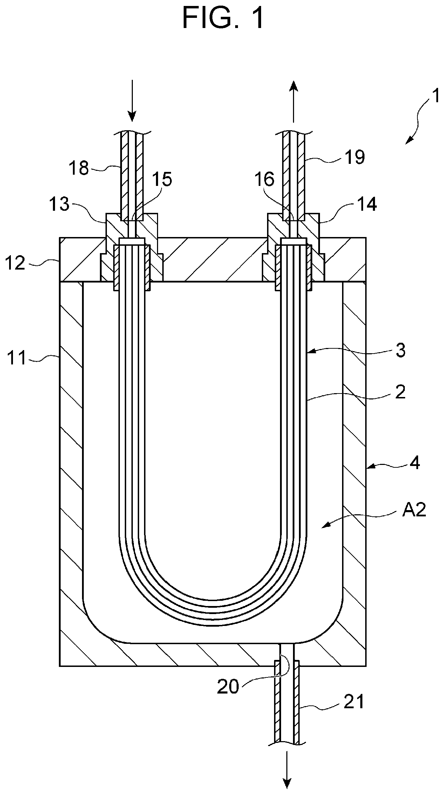

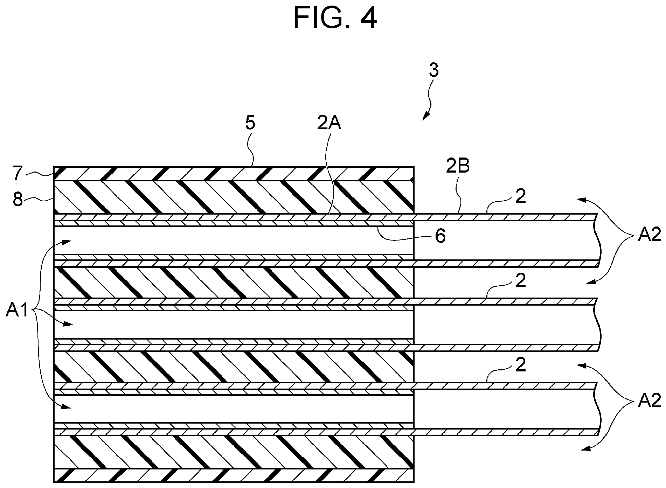

Fig. 1 is a schematic cross-sectional view illustrating an example of a degassing module. As illustrated in Fig. 1, a degassing module 1 is a module for degassing a liquid. The degassing module 1 includes a tube unit 3 in which a plurality of tubes 2 is bundled at both ends. The degassing module 1 also includes a housing 4 that accommodates the tube unit 3. In the degassing module 1, the space inside the housing 4 is divided into two regions, in other words, inside spaces A1 inside respective tubes 2 and an outside space A2 outside the tubes 2 (see Fig. 4). The degassing module 1 of the present embodiment is a degassing module of an internal perfusion type. Accordingly, a liquid is supplied to the inside spaces A1 and the air is drawn from the outside space A2. The degassing module 1 degasses the liquid by supplying a liquid into the inside spaces A1 of respective tubes 2 and by drawing the air from the outside space A2 of the tubes. Note that the degassing module 1 can be of an external perfusion type. In other words, the air can be drawn from the inside spaces A1, and a liquid is supplied to the outside space A2. In the case of the degassing module 1 being of the external perfusion type, the degassing module 1 degasses a liquid by supplying the liquid into the outside space A2 of the tubes 2 and by drawing the air from the inside spaces A1 of respective tubes 2.

In the case of the degassing module 1 being used for degassing a liquid for liquid chromatography, the liquid may be a solvent, for example, a nitrile-based solvent such as acetonitrile, a ketone-based solvent such as acetone, or an ester-based solvent such as ethyl acetate, to be used for "HIL-SOL", which is a solvent for the high performance liquid chromatography, or "Presol", which is a solvent for the large-scale liquid chromatography. "HIL-SOL" and "Presol" are products supplied by Kanto Chemical CO., INC.

Each tube 2 is a tubular membrane that allows gas to pass therethrough but prohibits liquid from passing therethrough. The material of the tube 2 and the shape, type, or the like, of the membrane are not specifically limited. For example, the material of the tube 2 is fluororesin, polypropylene (PP), polymethylpentene (PMP), silicone, polyimide, or polyamide. Examples of the fluororesin include polytetrafluoroethylene (PTFE), tetrafluoroethylene-perfluoroalkyl vinyl ether copolymer (PFA), tetrafluoroethylene- hexafluoropropylene copolymer (FEP), tetrafluoroethylene-ethylene copolymer (ethylene copolymer)(ETFE), polychlorotrifluoroethylene (PCTFE), amorphous fluoropolymer (AF), and polyvinylidene fluoride (PVDF). An example of the amorphous fluoropolymer is Teflon^{®} AF.

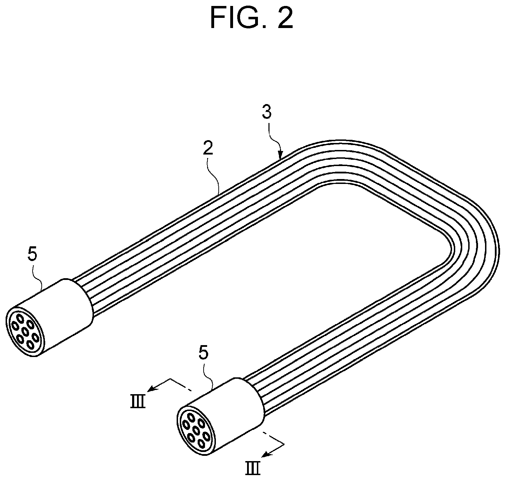

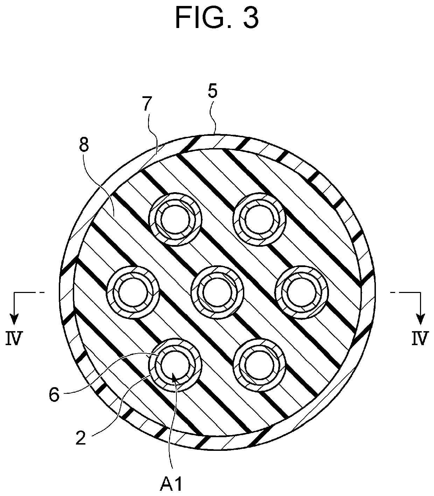

Fig. 2 is a schematic perspective view illustrating an example of a tube unit, and Fig. 3 is a schematic cross-sectional view taken along line III-III in Fig. 2. Fig. 4 is a schematic cross-sectional view taken along line IV-IV in Fig. 3. Note that these figures illustrate an example of a tube unit 3 having seven tubes 2. The number of the tubes 2, however, is not specifically limited. As illustrated in Figs. 2 to 4, the tube unit 3 includes a plurality of tubes 2 and a pair of bundling portions 5 that bundle the plurality of tubes 2 at both ends. The tube unit 3 also includes pipe elements 6 inserted in respective tubes 2. A pair of the bundling portions 5 are portions that are attached to the housing 4. A pair of the bundling portions 5 are structured similarly to each other. Accordingly, the following description will focus on one of the bundling portions 5 as a representative example. A pair of the bundling portions 5, however, can be structured differently.

The bundling portions 5 bundle both end portions of the plurality of tubes 2, respectively. In other words, the bundling portions 5 do not bundle a central portion of the plurality of tubes 2. Each tube 2 has a tube end portion 2A that is bundled by the bundling portion 5 and a mid-tube portion 2B that is not bundled by the bundling portion 5. Each bundling portion 5 includes an outer sheath 7 and a sealing member 8. The outer sheath 7 is fitted around end portions of the tubes 2, and the sealing member 8 is a filling with which the spaces among the end portions of the tubes 2 and between the outer sheath 7 and the end portions are filled.

The outer sheath 7 is formed substantially cylindrically and serves as the outermost layer of the bundling portion 5. The outer sheath 7 is a portion to be attached to the housing 4. For example, the material of the outer sheath 7 is a fluororesin, such as PFA or PTFE.

The space among the end portions of the tubes 2 (i.e., the tube end portions 2A) and between the outer sheath 7 and the end portions are filled with the sealing member 8. The sealing member 8 thereby bundles the end portions of the tubes 2 and seals the spaces among the end portions of the tubes 2 and between the outer sheath 7 and the end portions. In other words, the sealing member 8 is not present in the inside spaces A1 of respective tubes 2, whereas the sealing member 8 blocks the spaces among the tubes 2 and between the outer sheath 7 and the tubes 2. The sealing member 8 is present among the tubes 2, in other words, the sealing member 8 separates the end portions of the tubes 2 from each other. Accordingly, when the end face of the sealing member 8 is viewed, only the inside spaces A1 of the tubes 2 are open. For example, the material of the sealing member 8 is a fluororesin, such as FEP or PFA.

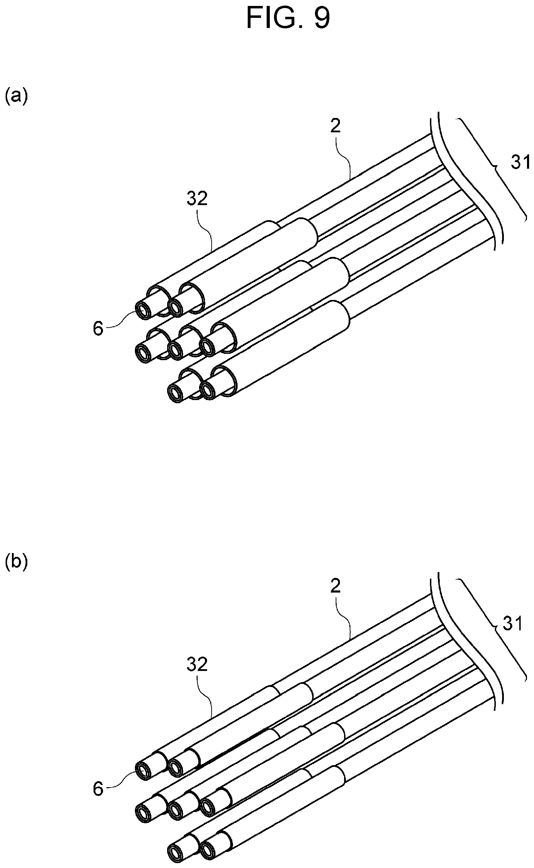

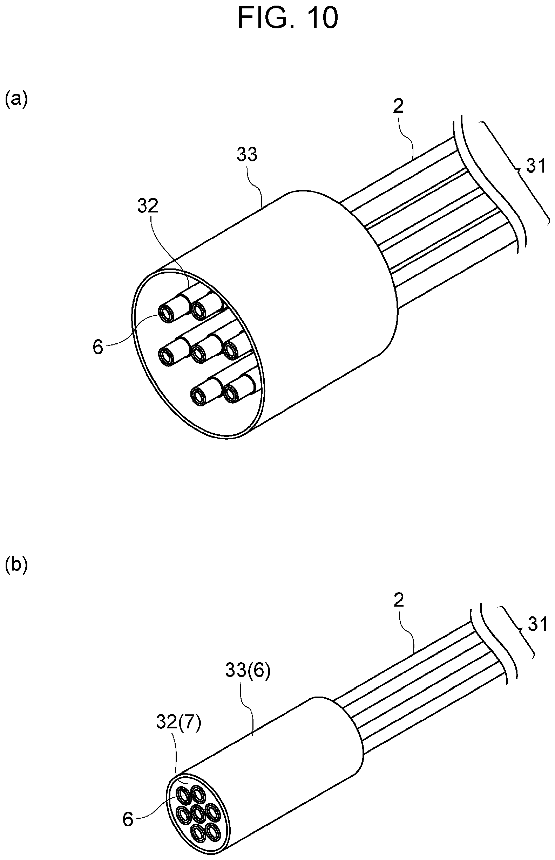

For example, the bundling portion 5 can be formed by heating and fusing inner sleeves 32 (see Figs. 9(a) and 9(b)) together into the sealing member 8 and by heating and contracting outer sleeves 33 (see Figs. 10(a) and 10(b)) into the outer sheath 7. When the bundling portion 5 is formed, the tube end portion 2A of each tube 2 is contracted, while the mid-tube portion 2B of each tube 2 is not contracted.

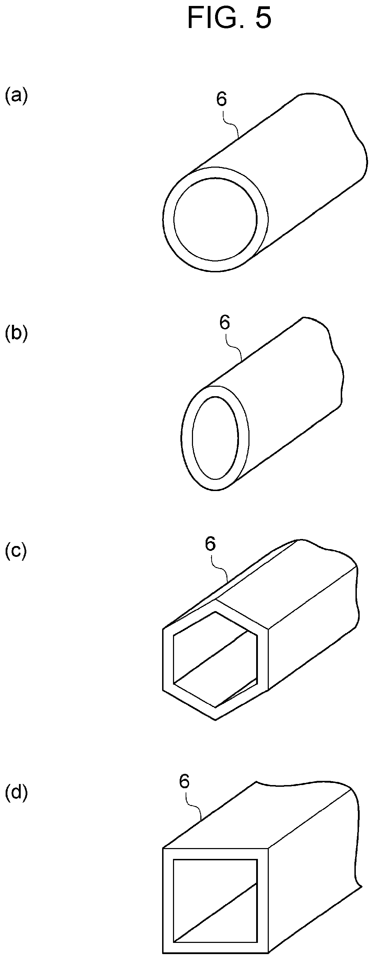

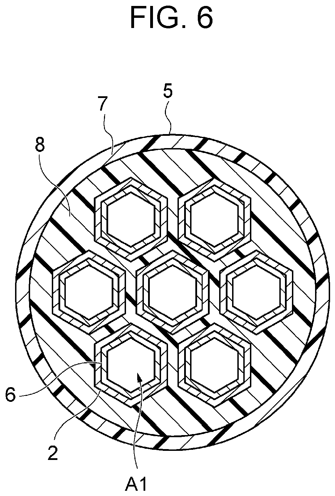

The pipe element 6 is inserted into the end portion of each tube 2 and supports the tube 2 from inside. The pipe element 6 has a tubular shape. For example, the cross-sectional shape of the pipe element 6 may be a circle as illustrated in Fig. 5(a), an oval as illustrated in Fig. 5(b), a hexagon as illustrated in Fig. 5(c), or a polygon, such as a quadrangle, as illustrated in Fig. 5(d). In the present embodiment, the pipe element 6 is formed into a circular pipe as illustrated in Fig. 5(a). In the case of the pipe element 6 being formed into a hexagonal pipe as illustrated in Fig. 5(c), the end portions of the tubes 2 can be arranged so as to form a honeycomb structure, in other words, a fine structure, as illustrated in Fig. 6.

The outer circumference of each pipe element 6 is not specifically limited insofar as the pipe element 6 can be inserted into the end portion of the tube 2 and can support the tube 2 from inside. For example, the outer circumference of the pipe element 6 may be 80% or more and 110% or less of the inner circumference of the mid-tube portion 2B. Alternatively, the outer circumference of the pipe element 6 may be 95% or more and 105% or less of the inner circumference of the mid-tube portion 2B, or may be 98% or more and 100% or less. The outer circumference of the pipe element 6, as used herein, is the peripheral length of the pipe element 6 in the cross section cut along a plane orthogonally intersecting the central axis of the pipe element 6. The inner circumference of the mid-tube portion 2B is obtained from the cross section of the mid-tube portion 2B cut along a plane orthogonally intersecting the central axis of the mid-tube portion 2B.

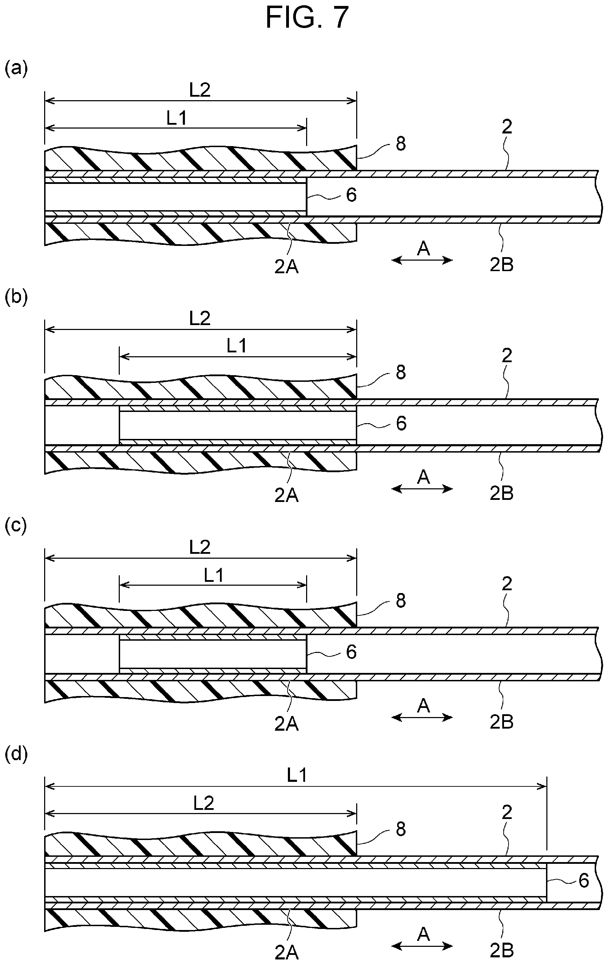

In the extending direction A of the tube 2, the relationship between the length L1 of the pipe element 6 and the length L2 of the tube end portion 2A is not specifically limited insofar as the pipe element 6 can be inserted into the tube end portion 2A and can support the tube 2 from inside. For example, as illustrated in Fig. 4, both ends of the pipe element 6 can be positioned at both ends of the tube end portion 2A in the extending direction A of the tube 2. Alternatively, as illustrated in Fig. 7(a), one end of the pipe element 6 can be positioned at the end of the tube end portion 2A located opposite to the mid-tube portion 2B (on the left side in the figure), whereas the other end of the pipe element 6 is positioned inward into the tube end portion 2A from the end of the tube end portion 2A located closer to the mid-tube portion 2B (on the right side in the figure). Alternatively, as illustrated in Fig. 7(b), one end of the pipe element 6 can be positioned at the end of the tube end portion 2A located closer to the mid-tube portion 2B (on the right side in the figure), whereas the other end of the pipe element 6 can be positioned inward into the tube end portion 2A from the end of the tube end portion 2A located opposite to the mid-tube portion 2B (on the left side in the figure). Alternatively, as illustrated in Fig. 7(c), one end of the pipe element 6 can be positioned inward into the tube end portion 2A from the end of the tube end portion 2A located closer to the mid-tube portion 2B (on the right side in the figure), and the other end of the pipe element 6 can be positioned also inward into the tube end portion 2A from the end of the tube end portion 2A located opposite to the mid-tube portion 2B (on the left side in the figure). Alternatively, as illustrated in Fig. 7(d), one end of the pipe element 6 can protrude further into the tube 2 from the end of the tube end portion 2A located closer to the mid-tube portion 2B (on the right side in the figure).

The length L1 of the pipe element 6 in the extending direction A of the tube 2 is not specifically limited insofar as the pipe element 6 can be inserted into the end portion of each tube 2 and can support the tube 2 from inside. For example, in the extending direction A of the tube 2, the length L1 of the pipe element 6 can be 1% or more and 200% or less of the length L2 of the tube end portion 2A. Alternatively, in the extending direction A of the tube 2, the length L1 of the pipe element 6 can be 10% or more and 100% or less of the length L2 of the tube end portion 2A, or can be 5% or more and 50% or less.

The material of the pipe element 6 is not specifically limited. For example, the material of the pipe element 6 can be a ceramic material such as zirconia or alumina, a metal such as stainless steel, or a fluororesin such as polytetrafluoroethylene (PTFE), tetrafluoroethylene-perfluoroalkyl vinyl ether copolymer (PFA), tetrafluoroethylene-hexafluoropropylene copolymer (FEP). The pipe element 6 is preferably made of a ceramic material from the point of view of reducing the likelihood of chemical components of the pipe element 6 leaching out into the liquid to be degassed in the degassing module 1 and also from the point of view of manufacturing the pipe elements 6 easily.

As illustrated in Fig. 1, the housing 4 includes a housing body 11, a lid 12, a first connector 13, and a second connector 14.

The housing body 11 is a portion that accommodates the tube unit 3. The housing body 11 is a cylindrically shaped container having an opening at one end. The lid 12 is joined to the housing body 11 in a gas-tight manner and closes the opening of the housing body 11. For example, the lid 12 can be joined to the housing body 11 by welding, screw-fitting, or interfitting. The housing 4 and the lid 12 can be formed integrally so that the housing body 11 and the lid 12 cannot be separated, insofar as this does not cause any assembling problem.

The first connector 13 and the second connector 14 are joined to the lid 12 in a gas-tight manner. A first inside-space opening 15 pierces the first connector 13 so as to communicate the inside and the outside of the housing 4 with each other, and a second inside-space opening 16 pierces the second connector 14 so as to communicate the inside and the outside of the housing 4 with each other. For example, the first connector 13 and the second connector 14 can be joined to the lid 12 by welding, screw-fitting, or interfitting.

The first connector 13 is joined gas-tightly to one of the bundling portions 5 of the tube unit 3. The first connector 13 thereby joins the one of the bundling portions 5 of the tube unit 3 gas-tightly to the housing 4. For example, the first connector 13 is shaped like a cylinder having a step portion and is disposed between the one of the bundling portions 5 of the tube unit 3 and the housing 4. A first pipe 18 is connected to the first connector 13. The first pipe 18 is in communication with the inside spaces A1 of respective tubes 2. For example, the one of the bundling portions 5 of the tube unit 3 can be joined to the first connector 13 by welding, screw-fitting, or interfitting. For example, the first pipe 18 can be joined to the first connector 13 by welding, screw-fitting, or interfitting.

The second connector 14 is joined gas-tightly to the other bundling portion 5 of the tube unit 3. The second connector 14 thereby joins the other bundling portion 5 of the tube unit 3 gas-tightly to the housing 4. For example, the second connector 14 is shaped like a cylinder having a step portion and is disposed between the other bundling portion 5 of the tube unit 3 and the housing 4. A second pipe 19 is connected to the second connector 14. The second pipe 19 is in communication with the inside spaces A1 of respective tubes 2. For example, the other bundling portion 5 of the tube unit 3 can be joined to the second connector 14 by welding, screw-fitting, or interfitting. For example, the second pipe 19 can be joined to the second connector 14 by welding, screw-fitting, or interfitting.

The housing body 11 has an outside-space opening 20. The outside-space opening 20 is an opening formed through the housing body 11, through which the gas present in the outside space A2 of the tubes 2 in the housing 4 is drawn. A third pipe 21 is connected to the outside-space opening 20. The third pipe 21 is in communication with the outside space A2 of the tubes 2 in the housing 4. A suction pump (not illustrated) is connected to the third pipe 21 to draw the gas through the outside-space opening 20, thereby depressurizing the outside space A2 of the tubes 2 in the housing 4. For example, the third pipe 21 can be joined to the outside-space opening 20 by welding, screw-fitting, or interfitting.

The degassing module 1 structured as described above degasses a liquid in the following manner: the liquid is supplied to the first pipe 18 and discharged from the second pipe 19 while the suction pump connected to the third pipe 21 draws the gas in the outside space A2 of the tubes 2 in the housing 4. The liquid supplied into the first pipe 18 subsequently enters the inside spaces A1 of respective tubes 2 through the first inside-space opening 15 formed in the first connector 13. When the liquid flows through the inside spaces A1 of the tubes 2, the outside space A2 of the tubes 2 in the housing 4 is in a depressurized state. Accordingly, dissolved gas or gas bubbles in the liquid pass through the walls of the tubes 2 and are drawn into the outside space A2 of the tubes 2 in the housing 4. Thus, the liquid is degassed. Consequently, the degassed liquid is discharged into the second pipe 19 through the second inside-space opening 16 formed in the second connector 14. Note that the liquid may be supplied through the second pipe 19 and discharged into the first pipe 18.

Next, a method of manufacturing the tube unit 3 will be described.

The following four steps are carried out in the method of manufacturing the tube unit 3 of the present embodiment: a step of inserting the pipe elements, a step of fitting the inner sleeves, a step of fitting the outer sleeves, and a step of heating. The step of fitting the inner sleeves, the step of fitting the outer sleeves, and the step of heating are included in a step of bundling the end portions of the tubes 2. The following describes the step of inserting the pipe elements, the step of fitting the inner sleeves, the step of fitting the outer sleeves, and the step of heating in this order. These steps, however, can be performed in a different order.

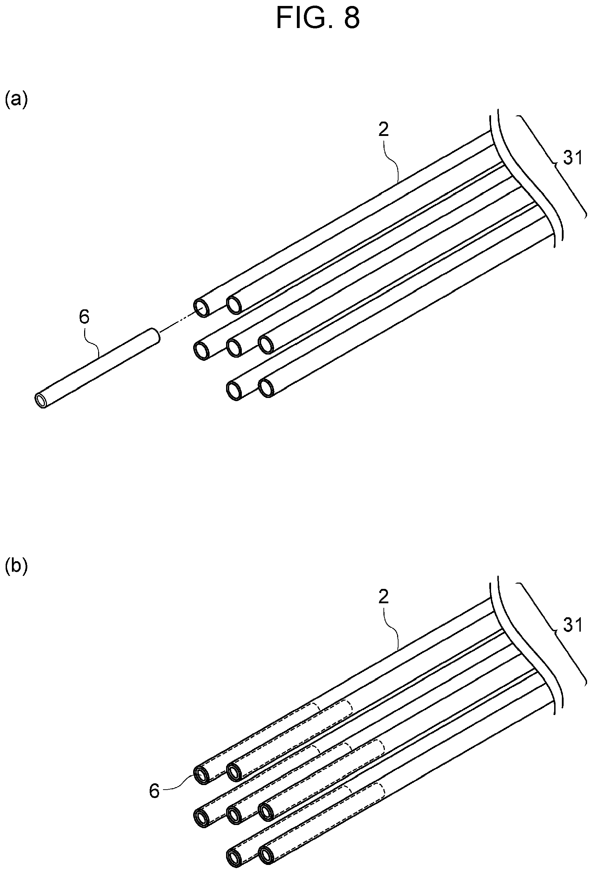

In the step of inserting the pipe elements, as illustrated in Figs. 8(a) and 8(b), the pipe elements 6 are inserted into respective tubes 2. The number of the tubes 2 is the number of the tubes 2 that constitutes the tube unit 3. In this step, the pipe elements 6 can be inserted into respective tubes 2 after the tubes 2 are bundled into a tube bundle 31, thereby improving workability. For example, the tubes 2 can be bundled into the tube bundle 31 using a work tape made of a fluororesin.

In the step of fitting the inner sleeves, as illustrated in Fig. 9(a), inner sleeves 32 made of a thermofusible resin are fitted around respective end portions of the tubes 2. The inner sleeves 32 are to be heated and fused into the sealing member 8. The thermofusible resin for the inner sleeves 32 is a resin that melts and flows when heated to a melting point or more. The thermofusible resin is preferably a resin that contracts when heated to a temperature near the melting point and that melts when heated to the melting point or more. The melting point of the thermofusible resin is preferably lower than the melting point of the tubes 2 and also lower than the decomposition temperature of the tubes 2. For example, the material of the thermofusible resin is a fluororesin, such as FEP or PFA. The inner circumference of each inner sleeve 32 is not smaller than, or preferably is greater than, the outer circumference of each tube 2.

In the step of fitting the inner sleeves, as illustrated in Fig. 9(b), the inner sleeves 32 are subsequently heated to contract to fix the inner sleeves 32 temporarily around respective end portions of the tubes 2. The heating temperature for the temporal fixation of the inner sleeves 32 is not higher than, or preferably is lower than, the melting point of the inner sleeves 32. This can reduce the likelihood of the inner sleeves 32 coming off the end portions of the tubes 2. Where the likelihood of the inner sleeves 32 coming off is negligible, it is not necessary to heat and contract the inner sleeves 32 for the temporal fixation.

In the step of fitting the outer sleeves, as illustrated in Fig. 10(a), an outer sleeve 33 made of a thermally contracting resin is fitted around the end portion of the tube bundle 31 formed by bundling the tubes 2. The outer sleeve 33 is to be heated and contracted into the outer sheath 7. The thermally contracting resin for the outer sleeve 33 is a resin that contracts when heated to a temperature near the melting point and melts and flows when heated to the melting point or more. The melting point of this thermally contracting resin is higher than the melting point of the thermofusible resin of the inner sleeves 32. The melting point of the thermally contracting resin is preferably lower than the melting point of the tubes 2 and also lower than the decomposition temperature of the tubes 2. For example, the material of the thermally contracting resin is a fluororesin, such as PFA or PTFE. The inner circumference of the outer sleeve 33 is not smaller than, or preferably is greater than, the outer circumference of the tube bundle 31.

In the step of heating, as illustrated in Fig. 10(b), the end portion of the tube bundle 31 is heated to contract the outer sleeve 33 and to melt the inner sleeves 32. In the step of heating, the end portion of the tube bundle 31 is heated to a temperature higher than the melting point of the thermofusible resin of the inner sleeves 32 and lower than the melting point of the thermally contracting resin of the outer sleeve 33. As a result, the outer sleeve 33 contracts to narrow the gap between the outer sleeve 33 and the tubes 2 and the gaps among the tubes 2. Meanwhile, the thermofusible resin of the inner sleeves 32 melts and flows, thereby sealing the gap between the outer sleeve 33 and the tubes 2 and the gaps among the tubes 2. Appropriate sealing can be made between the outer sleeve 33 and the tubes 2 and among the tubes 2 by, for example, adjusting the thickness of each inner sleeve 32. If the gaps are large, the thickness of the inner sleeve 32 can be increased. If the thermofusible resin of the inner sleeves 32 cannot seal the gap appropriately due to lack of resin, multiple layers of the inner sleeves 32 or additional members made of the same thermofusible resin can be provided to seal the gaps appropriately.

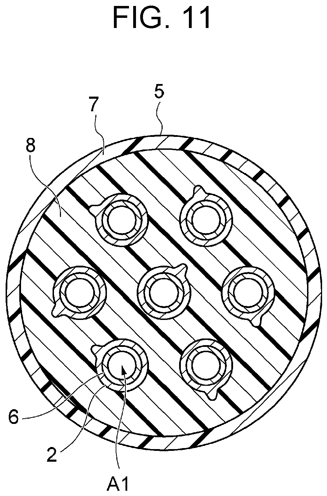

The contraction of the outer sleeve 33 compresses the end portion of each tube 2, which causes the end portion to come into contact with the pipe element 6. The end portion deforms so as to follow the external shape of the pipe element 6. The outer circumference of the pipe element 6 can be adjusted relative to the inner circumference of each tube 2, thereby enabling the end portion of the tube 2 to contract so as to follow the external shape of the pipe element 6 appropriately as illustrated in Fig. 3 or in Fig. 6 or enabling the end portion of the tube 2 to contract so as to produce one or more protrusions at the end portion as illustrated in Fig. 11.

More specifically, the outer circumference of the pipe element 6 can be set to be 96% or more and 99.9% or less of the inner circumference of each tube 2, which enables the pipe element 6 to be inserted easily into each end portion of the tube 2 and also enables the pipe element 6 to reduce the deformation of the end portion of the tube 2 when the inner sleeves 32 and the outer sleeve 33 contract. Put another way, the pipe element 6 can be inserted easily into the end portion of each tube 2 by setting the outer circumference of the pipe element 6 to be 99.9% or less of the inner circumference of the tube 2. Even in the case of the outer circumference of the pipe element 6 being greater than 99.9% of the inner circumference of the tube 2, the pipe element 6 can be inserted into the tube 2 by press-fitting. On the other hand, the outer circumference of the pipe element 6 can be set to be 96% or more of the inner circumference of the tube 2, which can reduce the likelihood of the end portion of the tube 2 deforming and folding in waves during the contraction of the inner sleeves 32 and the outer sleeve 33. This enables the end portion of each tube 2 to fit the external shape of the pipe element 6 and have the cylindrical shape as illustrated in Fig. 3 or in Fig. 6.

Alternatively, the outer circumference of the pipe element 6 can be set to be 80% or more and less than 96% of the inner circumference of the tube 2, which enables the pipe element 6 to produce one or more protrusions of the end portion of each tube 2 while the inside space A1 can be securely provided in the end portion of the tube 2. To put it more specifically, the pipe element 6 can securely provide the inside space A1 in the end portion of the tube 2 by setting the outer circumference of the pipe element 6 to be 80% or more of the inner circumference of the tube 2. When the inner sleeves 32 and the outer sleeve 33 contract, the end portion of the tube 2 can be intentionally folded in waves by setting the outer circumference of the pipe element 6 to be less than 96% of the inner circumference of the tube 2. This enables the end portion of the tube 2 to have a cylindrical portion elongated in the extending direction A of the tube 2 and a protrusion protruding outward from the cylindrical portion in the radial direction. The protrusion is formed as the wavy portion of the end portion of each tube 2.

In order to reduce the likelihood of the outer sleeve 33 coming off the tube bundle 31, the outer sleeve 33 can be temporarily fixed to the tube bundle 31 by slightly heating and contracting the outer sleeve 33 before carrying out the step of heating. In this case, the heating temperature of the outer sleeve 33 is not higher than, or preferably is lower than, the melting point of the outer sleeve 33. When the likelihood of the outer sleeve 33 coming off is negligible, it is not necessary to heat and contract the outer sleeve 33 for the temporal fixation.

Thus, the tube unit 3 with the end portions of the plurality of tubes 2 being bundled is produced.

In the tube unit 3 according to the present embodiment as described above, the pipe elements 6 are inserted into respective end portions of the tubes 2 that are bundled by the bundling portion 5. The pipe elements 6 support respective tubes 2 from inside. Each tube 2 may swell or contract due to a liquid supplied to the inside or outside of the tube 2. Each tube 2 may contract or may be depressed due to a negative pressure inside the tube 2. Even in such cases, the shape of the tube 2 can be maintained where the pipe element 6 is inserted. This can reduce the likelihood of the tube 2 coming off the bundling portion 5.

The pipe elements 6 of the tube unit 3 are shaped cylindrically, which enables the pipe elements 6 to be manufactured easily at low cost and also enables the end portions of the tubes 2 to be arranged densely.

The pipe elements 6 of the tube unit 3 can be formed as hexagonal pipes, which enables the end portions of the tubes 2 to be arranged so as to form the honeycomb structure or the fine structure.

The bundling portion 5 can be formed by thermal contraction. In this case, the tube end portion 2A is reduced in diameter due to the thermal contraction of the bundling portion 5 although the mid-tube portion 2B is not affected by the thermal contraction. The outer circumference of each pipe element 6 is 80% or more of the inner circumference of the mid-tube portion 2B, which reduces the likelihood of a gap occurring between the tube end portion 2A and the pipe element 6 after the thermal contraction of the bundling portion 5. This effect can be enhanced by setting the outer circumference of the pipe element 6 to be 95% or more, or 98% or more, of the inner circumference of the mid-tube portion 2B. On the other hand, the outer circumference of the pipe element 6 is 110% or less of the inner circumference of the mid-tube portion 2B, which enables the pipe element 6 to be inserted easily into the tube end portion 2A before the thermal contraction of the bundling portion 5. This effect can be enhanced by setting the outer circumference of the pipe element 6 to be 1050 or less, or 100% or less, of the inner circumference of the mid-tube portion 2B.

In the tube unit 3, the length L1 of each pipe element 6 is 1% or more of the length L2 of the tube end portion 2A in the extending direction A of the tube 2, which reduces the likelihood of each tube 2 coming off completely from the bundling portion 5. This effect can be enhanced by setting the length L1 of the pipe element 6 to be 10% or more, or 50% or more, of the length L2 of the tube end portion 2A. On the other hand, the length L1 of the pipe element 6 can be 200% or less of the length L2 of the tube end portion 2A in the extending direction A of the tube 2. In this case, part of the pipe element 6 protrudes from the tube end portion 2A. This reduces the likelihood of the tube end portion 2A being affected by deformation of the mid-tube portion 2B in the case where the mid-tube portion 2B, which is the portion not bundled by the bundling portion 5, swells or contracts due to a liquid supplied to the inside or outside of the tube 2 or in the case where the mid-tube portion 2B contracts or is depressed due to a negative pressure inside the tube 2. This effect can be enhanced by setting the length L1 of the pipe element 6 to be 100% or less, or 50% or less, of the length L2 of the tube end portion 2A.

The tubes 2 of the tube unit 3 contain a fluororesin, which improves chemical resistance.

The pipe elements 6 of the tube unit 3 are made of a ceramic material, which reduces the likelihood of chemical components of the pipe elements 6 leaching out into the liquid when a liquid is supplied into the inside or outside of the tube 2. Accordingly, the tube unit 3 can be used, for example, in a device for liquid chromatography where elution of foreign matter poses a problem.

In addition, in the tube unit 3, the space among the tubes 2 and between the outer sheath 7 and the tubes 2 is filled with the sealing member 8, which reduces the likelihood of the fluid leaking out into the space among the tubes when a fluid, such as a liquid or a gas, is supplied to the end face of the bundling portion 5.

In the tube unit 3, the end portions of respective tubes are spaced from each other, and the end portions of the tubes 2 are thereby covered with the sealing member 8. This can reduce the likelihood of the fluid leaking out at the interfaces of the end portions of the tubes 2.

In the degassing module 1 of the present embodiment, a liquid is supplied to the first inside-space opening 15 while gas is drawn out from the outside-space opening 20. The liquid supplied to the degassing module 1 is degassed while flowing through the tubes 2. In the degassing module 1, the tube unit 3 configured as described above can reduce the likelihood of each tube 2 coming off the bundling portion 5. As a result, the service life of the degassing module 1 can be extended.

When an ester-based liquid is supplied to the inside or outside of each tube 2, the tube 2 swells or contracts conspicuously. The degassing module 1 equipped with the above-described tube unit 3 can reduce the likelihood of each tube 2 coming off the bundling portion 5 when the ester-based liquid is supplied to the inside or outside of the tube 2.

In the method of manufacturing the tube unit 3 of the present embodiment, the pipe elements 6 are inserted into respective end portions of the tubes 2, and the pipe elements 6 support the tubes 2 from inside. Moreover, the tubes 2 are bundled together at the end portions of the tubes 2. Accordingly, the shape of each tube 2 can be maintained where the pipe element 6 is inserted when, for example, the tube 2 swells or contracts due to a liquid supplied to the inside or outside of the tube 2 or when the tube 2 contracts or is depressed due to a negative pressure inside the tube 2. As a result, the likelihood of a tube 2 coming off the bundling portion 5 can be reduced.

In the method of manufacturing the tube unit 3, an inner sleeve 32 is fitted around at least one of the tubes 2, the outer sleeve 33 is fitted around the end portions of the tubes 2. The end portions of the tubes 2 are heated to contract the outer sleeve 33 and melt the inner sleeves 32. The end portions of the tubes 2 are gathered by the outer sleeve 33 that contracts and are bundled by the thermofusible resin of the inner sleeves 32. Thus, the end portions of the tubes 2 are bundled together easily.

In the method of manufacturing the tube unit 3, the end portions of the tubes 2 are heated to contract the outer sleeve 33 and melt the inner sleeves 32 after the pipe elements 6 are inserted into respective end portions of the tubes 2. As a result, the end portions of the tubes 2 come into contact with respective pipe elements 6 when the outer sleeve 33 contracts. The end portion of each tube 2 can be thereby formed so as to follow the shape of the pipe element while reducing the likelihood of the end portion of each tube 2 being depressed too much.

One embodiment of the present invention has been described. The present invention, however, is not limited to the above embodiment.

For example, in the present embodiment, the degassing module 1 has been described as the internal perfusion type module that degasses a liquid when the liquid flows from the first inside-space opening 15 to the second inside-space opening 16 while the gas is drawn out from the outside-space opening 20. The degassing module, however, can be of an external perfusion type. In this case, for example, a first outside-space opening and a second outside-space opening are provided in place of the outside-space opening, and a single opening is provided to serve as the inside-space opening. A liquid can be degassed when the liquid flows from the first outside-space opening to the second inside-space opening while the gas is drawn out from the inside-space opening.

In the above embodiment, the tube unit has been described as the one having seven tubes, but the number of the tubes of the tube unit is not specifically limited. For example, the tube unit may include several tens or several hundreds of tubes.

In addition, it has been described in the above embodiment that the inner sleeves 32 are fitted around respective tubes 2. The inner sleeve 32, however, may be fitted around at least one of the end portions of the tubes 2.

### Reference Signs List

- 1: degassing module
- 2: tube
- 2A: tube end portion
- 2B: mid-tube portion
- 3: tube unit
- 4: housing
- 5: bundling portion
- 6: pipe element
- 7: outer sheath
- 8: sealing member
- 12: lid
- 13: first connector
- 14: second connector
- 15: first inside-space opening (inside-space opening)
- 16: second inside-space opening (inside-space opening)
- 18: first pipe
- 19: second pipe
- 20: outside-space opening
- 21: third pipe
- 31: tube bundle
- 32: inner sleeve
- 33: outer sleeve
- A1: inside space
- A2: outside space
- L1: length of pipe element
- L2: length of tube end portion

## Claims

1. A tube unit comprising:
multiple tubes;
a bundling portion that bundles end portions of the tubes; and
pipe elements that are inserted into respective end portions of the tubes and support the end portions of the tubes from inside.

2. The tube unit according to Claim 1, wherein
each pipe element is shaped cylindrically.

3. The tube unit according to Claim 1, wherein
each pipe element is shaped hexagonally.

4. The tube unit according to any one of Claims 1 to 3, wherein
each tube includes a tube end portion that is bundled by the bundling portion and a mid-tube portion that is not bundled by the bundling portion, and
an outer circumference of each pipe element is 80% or more and 110% or less of an inner circumference of the mid-tube portion.

5. The tube unit according to any one of Claims 1 to 4, wherein
each tube includes a tube end portion that is bundled by the bundling portion and a mid-tube portion that is not bundled by the bundling portion, and
in the extending direction of the tube, a length of each pipe element is 1% or more and 200% or less of a length of the tube end portion.

6. The tube unit according to any one of Claims 1 to 5, wherein
each tube contains a fluororesin.

7. The tube unit according to any one of Claims 1 to 6, wherein
each pipe element is made of a ceramic material.

8. The tube unit according to any one of Claims 1 to 7, wherein
the bundling portion includes
an outer sheath fitted around the tubes, and
a sealing member that fills a space among the tubes and between the outer sheath and the tubes.

9. The tube unit according to Claim 8, wherein
the end portions of the tubes are spaced from each other.

10. A degassing module that degasses a liquid, the degassing module comprising:
the tube unit according to any one of Claims 1 to 9; and
a housing in which the tube unit is accommodated and that separates inside spaces inside respective tubes from an outside space outside the tubes, wherein
each tube is a tubular membrane that allows gas to pass therethrough and prohibits liquid from passing therethrough, and
the housing has
an inside-space opening that is in communication with the inside spaces of the tubes, and
an outside-space opening that is in communication with the outside space of the tubes.

11. The degassing module according to Claim 10, wherein
the liquid is an ester-based liquid.

12. A method of manufacturing the tube unit, the method comprising:
a step of inserting pipe elements into respective end portions of tubes, the pipe elements supporting respective tubes from inside, and
a step of bundling the end portions of the tubes.

13. The method of manufacturing the tube unit according to Claim 12, wherein
the step of bundling the end portions of the tubes includes
a step of fitting an inner sleeve around at least one of the end portions of the tubes, the inner sleeve being made of a thermofusible resin,
a step of fitting an outer sleeve around the end portions of the tubes, the outer sleeve being made of a thermally contracting resin, and
a step of heating the end portions of the tubes to contract the outer sleeve and melt the inner sleeve, the step being carried out after the step of fitting the inner sleeve and the step of fitting the outer sleeve.

14. The method of manufacturing the tube unit according to Claim 13, wherein
the step of heating is carried out after the step of inserting the pipe elements.
